# EUROPÄISCHE PATENTSCHRIFT

(11) **EP 0 875 399 B1**
(45) Veröffentlichungstag und Bekanntmachung des Hinweises auf die Patenterteilung: **10.10.2001**
(21) Anmeldenummer: 98890111.2
(22) Anmeldetag: 16.04.1998
(51) Int. Cl.: B44C 5/04, B32B 27/04, B32B 29/00

(54) **Dekorlaminat und Verfahren zu seiner Herstellung**
Decorative laminate and method of producing same
Laminé décoratif et son procédé de fabrication

(30) Priorität: 30.04.1997 AT 75297
(43) Veröffentlichungstag der Anmeldung: 04.11.1998
(73) Patentinhaber: M. Kaindl, 5071 Salzburg (AT)
(72) Erfinder: Holleis, Falk, 83404 Ainring (DE)
(74) Vertreter: Wildhack, Helmut, Dr. Dipl.-Ing.

(56) Entgegenhaltungen:
- EP-A- 0 732 449
- DE-A- 2 923 608
- GB-A- 1 197 726
- US-A- 4 713 138
- US-A- 4 971 855

## Beschreibung

Die vorliegende Erfindung betrifft ein abriebfestes, bevorzugt hochabriebfestes, Laminat, wobei unter diesem Begriff einerseits das zur Ausstattung der Oberfläche eines, insbesondere plattenförmigen, Substrates, wie z.B. eines solchen auf Basis eines Holzfaser- oder Holzspan-Werkstoffes, mit abrasionsfester Ausrüstung versehene Bahnmaterial zu verstehen ist und anderseits die, bevorzugterweise mittels eines Heißpreßvorgangs, letztlich erhaltenen, mit einer abrasionsfesten und in der überwiegenden Zahl der Fälle gleichzeitig auch Dekorfunktion ausübenden Oberflächenschicht versehenen Substratmaterialien, bevorzugt Bauplatten, z.B. für den Möbel- und Innenausbau.

Weiters betrifft die vorliegende Erfindung die Herstellung der genannten, für die Substratbeschichtung vorgesehenen, abrasionsresistenten Dekor-Laminate bzw. Dekor-Laminatbahnen oder -bögen sowie die Herstellung der mit denselben beschichteten Substrate, insbesondere Bau-, Boden- und Möbelplatten.

Es ist eine große Zahl von Verfahren zur Herstellung von mit einer abriebfesten Oberflächenbeschichtung ausgestatteten Laminaten bekanntgeworden, wobei sich diese Verfahren oft nur durch relativ geringfügige Änderungen voneinander unterscheiden, welche jedoch für den Produktionsablauf, die Verarbeitungs- und Gebrauchseigenschaften des Produktes und nicht zuletzt für die Herstellungs- und Nutzungskosten durchaus- von entscheidender Bedeutung sein können.

Im wesentlichen ist der Grund-Herstellungsvorgang so, daß ein mit einem beliebigen Druckdekor versehenes oder einheitlich gefärbtes, nicht bedrucktes Papier mit einem hitzehärtbaren Harz, bevorzugterweise mit einem, gegebenenfalls modifizierten, Melamin-, Formaldehyd- und/oder Hamstoffharz imprägniert wird und danach oder später mit einer - meist mehrlagigen - ebenfalls mit einem thermohärtbaren Harz oder Harzgemisch, imprägnierten Faser-, insbesondere Papierbahn, welche Unterlags- und/oder Trägerfunktion übernimmt und meist als Kernbahn bezeichnet wird, unter Hitzeeinwirkung zu einer Laminatbahn mit Dekor-Verschleiß-Oberfläche verpreßt wird.

Ist das Harz dieser Dekor-Laminatbahn im wesentlichen auspolymerisiert, also gehärtet, kann dieselbe durch Klebung, eventuell Heißpreßklebung an eine Substatplatte, meist Holzspan- oder -faserplatte gebunden werden. Heute wesentlich überwiegt jedoch die Technik, das Harz der Dekor-Laminatbahn und der Kernlagenbahn jeweils nur einer Teilhärtung zu unterwerfen und dieses vorgehärtete Laminat unter Einwirkung von Hitze und Druck durch das dann fertig aushärtende Harz letztendlich an das jeweils vorgesehene Substrat zu binden.

Was nun die Herstellung von Dekorlaminaten mit (hoch)abriebfester Oberflächenbeschichtung betrifft, existiert dafür ebenfalls eine große Zahl von Vorschlägen.

Sie betreffen die zu verwendenden, die gewünschte Abrasionsfestigkeit generierenden, feinteiligen Hartstoffe selbst und deren Einbringung in eine für die Bildung der Verschleißschicht vorgesehene Harzmischung und deren nachhaltige Suspendierung in derselben, die letztlich die Qualität und Gleichmäßigkeit der Verschleißschicht entscheidend beeinflußt.

Aus der DE 28 58 182 C2 ist eine Dekorbahn zur Herstellung von Dekorplatten hoher Abriebwiderstandsfähigkeit mit einem Dekor auf einer als Substrat dienenden Papierschicht bekannt, bei der eine über dem Dekor angeordnete, ultradünne abriebresistente Beschichtung vorgesehen ist, die ein abriebresistentes feinteiliges Mineral in einer ausreichenden Menge enthält, um eine abriebresistente Schicht ohne Beeinträchtigung der Klarheit zu bilden und die darüber hinaus ein Bindemittel für dieses Material in einer zu dessen Bindung an der Oberfläche der Papierschicht ausreichenden Menge aufweist, wobei das Bindemittel mit hitzehärtbarem, zur Dekorplattenherstellung verwendetem Melamin-Formaldehyd- undloder Polyesterharz verträglich und für diese Harze durchlässig ist.

Die Herstellung dieses bekannten Dekorlaminats erfolgt, wie insbesondere auch aus der DE 2 800 762 hervorgeht, so, daß zuerst die nichtimprägnierte Dekorbahn mit einer wässrigen, mit mikrokristalliner Cellulose stabilisierten Suspension von Aluminiumoxid-Teilchen beaufschlagt und getränkt wird, wonach eine Trocknung erfolgt. Danach wird die Imprägnierung mit der dort vorgesehenen Melamin-Formaldehydharz-Emulsion vorgenommen und schließlich wird diese Verschleiß-Dekorbahn mit einer mehrlagigen Kembahn und einem Substrat in der Hitze verpreßt.

Bei einer derartigen Dekorbahn zur Herstellung von Dekorplatten liegen die abriebresistenten feinteiligen Mineralien jedoch an der Oberfläche, d.h. die Mineralien stehen teilweise aus der oberen Schicht hervor und verursachen dadurch zum einen eine nichtgewollte Rauhigkeit der Fläche und zum anderen einen erhöhten Verschleiß durch Beschädigung der zur Herstellung der Platten notwendigen Werkzeuge. Darüber hinaus ist es erforderlich, die abriebresistente Beschichtung in einem separaten Arbeitsgang über dem Dekor anzuordnen, so daß dies eine Verteuerung der Herstellung mit sich bringt.

Die DE 195 08 797 C1 sieht bei einem Verfahren zur Herstellung eines Dekorlaminatpapiers vor, daß ein Gemisch aus Melaminharz, α-Cellulose, Korund als Hartstoff, Additiven und Hilfsstoffen sowie Wasser zu einer bestimmten Viskosität gemischt wird und dieses Gemisch auf die Sichtseite eines schon in einem vorhergehenden Schritt mit Harz getränkten, jedoch bis auf eine bestimmte Restfeuchte von einigen Prozenten getrockneten Dekorpapierbogens aufgebracht wird, wonach eine Trocknung auf eine gewünschte Endfeuchte erfolgt. Die gemäß dieser Patentschrift zu erzielende, die Korundpartikel enthaltende Verschleißschicht soll etwa 20-65 um Dicke aufweisen.

Diese Verfahrensweise soll den Vorteil bringen, daß die Korundteilchen, deren Korngröße zwischen 15 und 50 µm liegen soll, auch an ihren aus der angestrebten Verschleißschicht eventuell noch "herausragenden" Extrem-Spitzen und -Kanten mit einem kontinuierlichen Harzfilm bedeckt sind.

Im Vergleich zur vorher erörterten DE 28 58 182 C2 soll der Vorteil der dortigen zweistufigen Vorgangsweise darin liegen, daß durch die auf diese Weise erreichte, vollständige Ummantelung der Hartstoff-Teilchen auch an ihren Extremstellen eine Beschädigung der Preßplatten beim Heiß-Verpressen der Dekorlaminate und schließlich der Laminate mit den Substratplatten nicht mehr zu befürchten ist. Damit entfällt der Einsatz von Overlaypapieren, die gemäß älteren Verfahren zum Schutz der Stahlplatten der Pressen vorgesehen wurden. Das Weglassen der Overlaypapiere bringt Verschleißschichten mit erhöhter Transparenz und klarer Sichtbarkeit des jeweiligen Dekors.

Eine wie oben beschriebene, sichere Ummantelung der Abrasivstoff-Teilchen auch an ihren Extremstellen sollte auch das Laminat-Herstellungsverfahren gemäß US 4 322 468 A bringen, wobei dort zuerst eine Siliciumdioxid-Partikel als Hartstoff und das Melamin-Formaldehydharz enthaltende Dispersion auf den Dekorbogen aufgebracht wird und dieser noch feucht mit einem modifizierten Melaminharz überschichtet wird.

Der US 3 135 643 A ist eine zur eben beschriebenen etwa inverse Herstellungsmethode zu entnehmen, bei welcher die Dekorbahn zuerst mit einer Harzsuspension getränkt wird und diese noch feucht mit einer Melaminharz, Siliciumdioxid, Cellulose, ein Cellulosederivat und Wasser enthaltenden Dispersion überschichtet wird. Es erfolgt dort ein Abstreifen überschüssigen Auftragsharzes mittels eines Abstreifmessers. Die dort vorgesehenen Mischungen stellen jedoch die oben erwähnte, für die Schonung der Pressen-Platten wichtige Voll-Ummantelung der Abrasivstoff-Partikel nicht immer sicher.

Für die jeweils geforderten Verschleißeigenschaften der äußeren Beschichtung von entscheidender Bedeutung ist neben der Eigen-Härte der Abrasivstoff-Partikel deren Form und Größe, insbesondere dann auch deren größenspektrale Verteilung, deren materielle mechanische Einbindung in die Harzmatrix und selbstverständlich auch der Grad der Homogenität ihrer flächenmäßigen und räumlichen Verteilung in der fertig ausgehärteten Oberflächen-Verschleißschicht.

Auf diese letztlich zu erreichende Homogenität der räumlichen Verteilung, bei welcher aber auch der Füllungsgrad, also die Menge der Abrasivstoffteilchen pro Volums- bzw. Masseneinheit der Harzmatrix eine wesentliche Rolle spielt, ganz entscheidenden Einfluß hat die Art und der Erfolg der Stabilisierung der Teilchen in der Harzdispersion oder -emulsion vor deren Auftrag zur Imprägnierung oder Beschichtung des Dekorlaminats.

Für diese Dispergierung und ein nachhaltiges In-Schwebe-Halten der Partikel sind schon die verschiedensten Dispergiermittel-Substanzen vorgeschlagen worden. Besonders beliebt für diesen Zweck sind α-Cellulose, modifizierte Cellulosen und mikrokristalline Cellulose.

Solche Cellulosen haben den Vorteil, daß sich ihr Brechungsindex wenig oder nicht vom Brechungsindex des sie einbindenden, letztlich ausgehärteten Harzes unterscheidet, was für die Klarheit und Transparenz der Verschleißoberfläche und damit für eine hohe Wiedergabequalität des Dekors ganz wesentlich ist.

Was die für die Abriebfestigkeit der Laminate verantwortlichen Hartstoffe betrifft, existieren auch dafür die verschiedensten Vorschläge: Es seien nur beispielhaft Teilchen auf Basis von Siliciumoxid, Siliciumcarbid, Pyrophyllit, Andalusit, Titandioxid und Aluminiumoxid genannt. Auch bei den Abrasivstoff-Teilchen ist eine Übereinstimmung der Brechungsindices von Partikel und Harzmatrix für die Klarheit der Wiedergabe des Dekors unter der verschleißfesten Schicht wichtig. Weitestgehend erfüllt α-Aluminiumoxid, also insbesondere Korund, diese Forderungen, wobei dieses, gegebenenfalls auch synthetische, Mineral den Vorteil hat, die gleich nach dem Diamant kommende Mohs-Härte zu besitzen.

Überwiegend sind die zum Einsatz kommenden Harze Aminoplastharze und beruhen überwiegend auf einer Harnstoff- oder Melamin-Formaldehyd-Basis. Es ist eine kaum überschaubare Anzahl von Vorschlägen für solche für Dekor-Laminate mit Verschleiß-Beschichtungen sich eignende Harz-Systeme bekanntgeworden.

Aus der EP 472 036 A1 (Formica) ist ein zweistufiges "Naß-in-Naß"-Verfahren für die Herstellung abrasionsfester Dekorlaminate bekannt geworde, wobei allerdings gemäß dieser EP-A1 vorgesehen ist, daß die Dekorbahn selbst in jedem Fall schon im Rahmen der ersten Beaufschlagung mit Harz zu deren Tränkung bis zu einem jeweils gewünschten Prozentsatz mit einer zwingend Abrasivstoff-Teilchen enthaltenden Melaminharz-Dispersion od.dgl. imprägniert wird. Nachteil dieser Art der Einbringung der Abrasivstoff-Teilchen auch direkt in die Faser- bzw. Papierbahn der Dekorschicht ist einerseits, daß Abrasivstoff-Partikel in der Faserbahn zur Erhöhung der Abriebfestigkeit der Oberfläche nichts beitragen können, sie also verlorenen Aufwand darstellen und anderseits, daß innerhalb der Dekorschicht die Verteilung der Teilchen nicht homogen ist, sodaß lokale Versteifungen eintreten.

In einem zweiten Schritt erfolgt gemäß dieser EP-A1 zur Finalisierung der Tränkung dann eine Beaufschlagung mit einer ebenfalls die Abrasivstoffe enthaltenden Melaminharzdispersion od.dgl.

Demgemäß sind in den Dekorlaminaten gemäß dieser Schrift sowohl in der letztlich hitzegehärteten Tränkmasse in der Dekor-Papierbahn selbst, als auch in deren sie nach außen hin abschließenden Verschleißschicht zwingend Abrasivstoff-Teilchen eingebaut, was in jedem Fall einen unnötigen Mehraufwand an Abrasivstoff erfordert und zu einer Art "Versteifung" der Dokorbahn selbst infolge des dort vorgesehenen Einbaues der Abrasivteilchen in dieselbe führt, wodurch die Flexibilität beim danach oder erst später vorzunehmenden Beschichtungsvorgang gestört werden kann.

Für den Fall eines in der EP-A1 weiters vorgeschlagenen Schichtaufbaues, welcher durch Tränkung der Dekorbahn mit Harz mit Abrasivstoff-Teilchen und darüber liegender Anordnung einer Außenschicht ohne Abrasivstoff-Partikeln gekennzeichnet ist, ist im übrigen zwischen dem ersten Schritt der Tränkung der Dekorbahn mit einer dort also zwingend Abrasivstoff-Teilchen enthaltenden Harzmasse und dem zweiten Auftrag einer dort dann abrasivstoff-freien Oberflächenschicht ebenfalls zwingend ein Trocknungs-Schritt vorgesehen: Es erfolgt in diesem Fall überhaupt keine "Naß-in-Naß"-Imprägnierung, womit eine integral ineinander übergehende Schichtfolge nicht erreichbar ist.

Die EP 186 257 stellt bloß den allgemeinen Stand der Technik dar, sie hat ein gleichzeitiges Imprägnieren und Coaten einer außenliegenden Dekorbahn mit einer Abrasivstroff-Partikel enthaltenden Harz-Komposition zum Gegenstand und führt zu einem Einbau dieser Partikel und auch insbesondere in die Faserbahn selbst, was, siehe die obigen Ausführungen, aus Gründen der Verarbeitungssicherheit und -flexibilität nicht günstig ist.

Zu erwähnen ist weiters die EP 732 449 A1, gemäß welcher abriebfeste Laminate dadurch erhalten werden, dass der zu beschichtende Dekorpapier-Bogen zuerst mit dem Harz imprägniert wird, wonach eine Trocknung auf gewisse Restfeuchtewerte erfolgt, und dann erst auf die getrocknete Imprägnierschicht eine die Abrasivstoff-Teilchen, α-Cellulose, Harz und Additive enthaltende Harzmasse aufgebracht wird. Nachteil dieser Beschichtungsmethode ist, dass eine echte mechanisch hoch beanspruchbare Aneinanderbindung des Imprägnier-Harzkörpers mit dem die Abrasivstoff-Teilchen enthaltenden Beschichtungs-Harzkörpers nicht erzielbar ist.

Den in den Druckschriften US 4,723,138 A und US 4,971,855 A beschriebenen Verfahren zur Herstellung von Laminaten mit abriebfesten Oberflächenbeschichtungen haften die bei Einschritt-lmprägnier-Beschichtungen mit Abrasivstoff-Teilchen nicht zu vermeidenden Nachteile an, die auch durch den dort vorgesehenen Einsatz von mikrokristalliner Cellulose als Suspendier-Hilfsmittel nicht kompensierbar sind: Gemäß der dort beschriebenen Technologie wird auf das zu imprägnierende Papier ohne Vorbehandlung ein die Abrasivstoff-Teilchen, mikrokristalline Cellulose und das Harz enthaltendes Gemisch aufgebracht. Infolge der Saug- und Absorptionswirkung des ungetränkten Papiers kommt es infolge von dessen Faser-Inhomogenitäten zu ungleichmäßigen Sauggeschwindigkeiten an verschiedenen Stellen der Papier-Oberfläche, wodurch dort, wo eine raschere Absaugung erfolgt, beispielsweise mehr Abrasivstoff-Teilchen mit der flüssigen Phase angesaugt werden und dort zu einer Zone höherer Flächenbelegung führen als in anderen Bereichen. Durch die hohe Sogwirkung wird auch die angestrebte und z.B. durch die mikrokristalline Cellulose als Stabilisator unterstützte, geordnete gegenseitige Ausrichtung der Teilchen gestört, sodass in Zonen schneller Saugwirkung sich etwa Büschel, Bündel oder Nester der Teilchen ausbilden, welche die Homogenität der Eigenschaften der abriebfesten Oberfläche der Laminate empfindlich stören können.

Diese Saugwirkungs-Dynamik wird auch durch den gemäß den Schriften vorgesehenen Gehalt der Tränk- und Beschichtungs-Masse an mikrokristalliner Cellulose nicht wesentlich gehemmt. Der Grund hiefür ist darin gelegen, dass mikrokristalline Cellulose ein mit der den wesentlichen Bestandteil von Papierfasern bildenden Cellulose praktisch identisch ist.

Der US 4,971,855 A ist weiters der allgemeine Rat zu entnehmen, andere Bindemittel als mikrokristalline Cellulose einzusetzen, konkret ist als Alternative nur "Kelgin", ein Natriumalginat, genannt. Bei der gemäß dieser US-Schrift vorgesehenen Einschritt-Imprägnierungs-Beschichtung kann auch ein Alginat die durch die Absorptions-Kräfte der vorher nicht imprägnierten oder getränkten Papierbahn hervorgerufenen, oben genannten Nachteile für die Qualität der Beschichtung nicht verhindern.

Die Erfindung hat sich die Aufgabe gestellt, ein Dekorlaminat bzw. mit demselben beschichtete Substratkörper, insbesondere Bauplatten, für die verschiedensten Anwendungsgebiete zu schaffen, welches Laminat sichtseitig eine in ihren Verschleißeigenschaften bis zu höchsten Abriebwerten regelbare und in ihrer Klarheit und Dekor-Wiedergabequalität hohen bzw. höchsten Anforderungen entsprechende, Oberflächen-Beschichtung aufweist. Dennoch soll sowohl von der Seite der einzusetzenden Produkte als auch vom Produktionsablauf her der Herstellungsvorgang störungssicher und kostengünstig sein.

Im Zuge eingehender Versuche wurde gefunden, daß die Einarbeitung bestimmter Naturstoffe bzw. naturidenter Stoffe zumindest in die Harzmatrix, welche die die Verschleißfestigkeit gewährleistenden Hartstoffpartikel enthalten soll, zu unerwartet qualitätsvollen, optisch äußerst ansprechenden, hohe Gebrauchsqualität und an einen jeweils gewünschten Einsatz, abgestimmte Verschleißeigenschaften bei optimaler Einbindung der Partikel führt, wobei nicht nur keine eventuell auftretende Beeinträchtigung des Produktionsvorgangs, sei es durch etwa zu erwartende Probleme bezüglich Thermostabilität, bezüglich der Haft- und Klebeeigenschaften bei längerer Hitzeinwirkung, sowie bezüglich der Form- bzw. Pressen-Trenneigenschaften od.dgl. auftritt, sondern eine kompakte und aufwandsminimierte Produktionsweise erreicht wird. Weiters wurde gefunden, daß eine bestimmte Aufeinanderfolge von Verfahrensschritten unter Anwendung einer Naß-in-Naß-Technik zu besonders hochwertigen Laminatkörpem bzw. Laminatplatten führt.

Gegenstand der Erfindung ist somit ein Dekorlaminat mit abriebfester Oberflächen-Beschichtung bzw. damit beschichtete(r) Substratkörper bzw. Dekorplatte, wobei das Laminat mit zumindest einer, Lage einer mit einem hitzegehärteten Kunstharz imprägnierten Faserstoff- undloder Papierbahn (Träger- bzw. Kernbahn), und einer an sie gebundenen, ebenfalls derart imprägnierten und hitzegehärteten, mit einem Dekor versehenen, äußeren bzw. sicht- und gebrauchsseitigen Faserstoff- und/oder Papierbahn (Dekorbahn) gebildet ist, welche mit einer abrasionsresistent ausgerüsteten, hitzegehärteten Masse auf Basis mindestens eines hitzehärtbaren Kunstharzes bzw. Melaminharzes, dem mindestens ein Polysaccharid zugesetzt ist, mit mindestens einem Plastifizierungsmittel und/oder weiteren Additiven und/oder Hilfsstoffen beaufschlagt und imprägniert ist, wobei in der hitzegehärteten Kunstharzmasse der Dekorbahn Partikel mindestens eines abrasionsresistenten Hartstoffes bzw. von α-Aluminiumoxid bzw. α-Korund, verteilt sind, und wobei das Dekorlaminat mit einer - durch zwei im wesentlichen unmittelbar aufeinanderfolgende Materialaufträge mit einer Mischung von Harzkomposition und Abrasivstoffkomposition gebildeten - Matrix beaufschlagt ist, bzw. ein derartiges an einen Substratkörper bzw. an eine Bauplatte od.dgl. auf Basis von mit hitzegehärtetem Kunstharz gebundenen Faserstoff(en) oder holzfaser-gebundenes Dekorlaminat.

Die wesentlichen Merkmale des neuen Laminat-Werkstoffes bestehen nun darin,
- dass das genannte Dekorlaminat in Form eines Laminatbogens oder einer Laminatbahn
- von einer Matrix aus der hitzegehärteten Masse auf Basis mindestens eines hitzehärtbaren Kunstharzes oder aber mindestens eines derartigen Kunstharzes in Kombination mit mindestens einem, Polysaccharid(e) enthaltenden bzw. an Polysaccharid(en) reichen Naturstoff bzw. naturidenten Stoff aus der Gruppe Guarkern-Mehl, Mehl(e) von Topinambur, Zichorie oder Dahlie, Johannisbrotkern-Mehl, (Cesa-gum), Guargum, Gummi arabicum, Carrageen, Traganth, Agar Agar und Xanthan, besonders bevorzugt jedoch Johannisbrotkem-Mehl oder Xanthan und mindestens einem weiteren Additiv und/oder Hilfsstoff, jedoch ohne Gehalt an Abrasivstoff-Teilchen durchdrungen ist
- und die genannte, von der Dekorbahn aufgenommene bzw. absorbierte, abrasivstoff-freie Matrix grenzflächenlos einstückig
- in eine mit ihr integrale, die äußere Faserstoff- und/oder Papierbahn (Dekorbahn) nach außen bzw. sicht- und gebrauchsseitig abschließende, mit einer Kombination von hitzehärtbaren Kunstharz, mit mindestens einem Polysaccharid(e) enthaltenden bzw. an reichen Naturstoff bzw. naturidenten Stoff aus der oben genannten Gruppe und mindestens einem weiteren Additiv und/oder Hilfsstoff gebildete, klar-transparente Deckund Verschleißschicht übergeht,
- wobei die polysaccharid-hältige, bzw. -reiche Naturstoff-Komponente in der hitzegehärteten Masse der Matrix in Mengen von 2 bis 30 Masse-%, bevorzugt von 5 bis 20 Masse-%, jeweils bezogen auf die Summe der Massen von hitzegehärtetem Harz, Naturstoff(en), Additiv(en) und/oder Hilfsstoff(en) und eventuell enthaltenen Hartstoff-Teilchen enthalten ist und
- wobei in der hitzegehärteten Masse der genannten, mit der Imprägnier-Matrix der Dekorbahn integralen Deck- und Verschleißschicht die Partikel des abrasionsfesten Hartstoffes bzw. α-Aluminiumoxid- bzw. α-Korund-Partikel verteilt sind.

Das neue Laminat zeichnet sich durch besonders hohe Homogenität der räumlichen Verteilung der Hartstoffpartikel und deren besondere Konzentrierung in der Verschleißschicht aus und dadurch, daß auch das jeweilige Komgrößenverteilungs-Spektrum an allen Stellen dieser Schicht gleichartig ist. Dies scheint, wie einschlägige Untersuchungen vermuten lassen, vor allem eine Folge der in die für die Verschleißschichtbildung vorgesehene Harzmasse eingebauten, oben spezifizierten Naturstoffe bzw. naturidenten Stoffe zu sein. Diese Stoffe sind vor und während der Produktion imstande, die Partikel in der Kunstharz-lmprägnier-Emulsion derart gut zu stabilisieren, daß selbst bei einem bevorzugt anzuwendenden, die innige Verbindung von Dekorbahn und deren Harzmatrix zur Harzmatrix der Verschleißschicht sicherstellenden Naß-in-Naß-Auftrag der Beschichtungsmasse für die Verschleißschicht keine Entmischungsphänomene auftreten, z.B. in Richtung quer zur Erstreckung der Schicht und zwar weder, was die absolute Volumsbeladung noch, was die spektrale Verteilung der einzelnen Komgrößenklassen des Abrasivstoffes betrifft. Erstaunlicherweise gilt dies auch bei hohen Volumsbeladungsgraden.

Diese Art der Verteilungshomogenität führt dazu, daß die Verschleißschichten der Laminate ganz präzise auf einen späteren Anwendungszweck und als Folge der Nutzung auftretenden Abrasionseffekt hin programmierbar sind und daß sich die Abriebeigenschaften während der Nutzungsdauer und damit während der Dauer der Verschleißbeanspruchung solange nicht verändern, bis die Verschleißschicht tatsächlich bis zum Dekorbogen selbst durchgescheuert ist. Einen besonderen Vorteil bringen diese Naturstoffe, wie sich zeigte, dadurch, daß sie zu einer optimalen mechanischen Einbindung und Verankerung der Abrasivstoff-Teilchen in der Harzmasse führen, die auch nach der Härtung nicht gelockert ist, so daß, selbst wenn die Partikel nach erfolgtem Verschleiß der sie umgebenden Harzschicht schon offenliegen, ein "Herausreißen" der Partikel aus dem Verbund mit dem Harz der Verschleißschicht nicht eintritt.

Ebenfalls unerwartet war, daß jeder der zumindest in der Verschleißbeschichtungs-Kunstharzmasse erfindungsgemäß vorgesehenen Naturstoffe, bzw. naturidenten Stoffe, den bei der Laminatherstellung und beim Pressen der Dekorplatten auftretenden Temperaturbedingungen problemlos gewachsen ist und die Massen auch langzeitig nicht zu Vergilbungen, Trübungen od.dgl. neigen. Was diese Naturstoffe weiters auszeichnet, ist ihre optimale Anpassung an die o.a. Bedingungen bezüglich der Licht-Berechnungsindizes von Harz und Naturstoff sowie letztlich auch des Hartstoffes in deren Verbund.

Sie verleihen der Verschleißschicht selbst bei hohem Abrasivstoff-Füllgrad überraschend hohe Transparenz, so daß auch unter diesen, höchste Abrasionswiderstände gewährleistenden Umständen eine praktisch originalgetreue Wiedergabe des Druckmusters bei hoher Farbbrillanz erreicht werden kann.

Vorteilhaft für eine hohe Qualität der Deck- und Verschleißschicht der erfindungsgemäßen Laminate ist auch die Einhaltung von Mengenverhältnissen zwischen den Abrasivstoff-Teilchen und den übrigen Komponenten wie im oben zitierten Anspruch 1 wiedergegeben, wobei sich die dort genannten Prozentzahlen jeweils auf die Feststoffbestandteile und den trockenen Zustand beziehen.

Nicht zuletzt ist anzumerken, daß die bisher in der Hauptsache als Dispergiermittel für die Abrasivstoff-Teilchen eingesetzten α-Cellulosen, mikrokristallinen Cellulosen u.dgl. durchaus einen Kostenfaktor darstellen, welcher durch den erfindungsgemäß vorgesehenen Einsatz von Heteropolysaccharid-bzw. Pektin-Naturstoffen, welche z.B. auch landwirtschaftliche oder agrarindustrielle Abfallprodukte sein können, wie z.B. Obstschalen, Traubentrester usw., gesenkt werden kann.

Zu den immer wieder genannten Additiven und Hilfsstoffen ist nur soviel auszuführen, daß hierunter jeweils einzelne oder mehrere in der Laminatherstellung schon lange gebräuchliche und gegebenenfalls nur modifizierte Katalysatoren, Härter, Beschleuniger, Modifikatoren, Kupplungsmittel, Trennmittel, Netzmittel u.dgl. zu verstehen sind.

Bezüglich der Papierqualität der Dekorbahn sind an sich keine Grenzen gesetzt, wenn das Papier nur im Zusammenspiel mit der Viskosität der jeweils zur Anwendung kommenden Imprägnier-Harzmischung richtig gewählt, ist. Bevorzugt finden Dekorpapiere mit einer Grammatur von 60 - 120 g/m² und Gurley-Werten von 15-25 s Einsatz. Der Gurley-Wert ist eine in der Papierbranche verwendete Kenngröße für die Durchlässigkeit, Porigkeit bzw. Saugfähigkeit von Papieren. Dieser Kennwert gibt die Zeit an, innerhalb welcher durch eine Fläche von 100 cm² eines Papiers unter bestimmtem Druck stehende Luft in einer Menge von 100 cm³ hindurchgetreten ist.

Auch die Zahl und Vielfalt der in Frage kommenden thermohärtbaren Basis-Harze ist groß, bevorzugt finden Melamin-Formaldehydharze Einsatz, die jedoch auch in die verschiedensten Richtungen hin, wie z.B. mit Polyesterharzen, Polyolen, Acrylharzen u.dgl. modifiziert sein können.

Es hat sich, sowohl was die optische Klarheit der Verschleißschicht als auch was deren Abriebfestigkeit betrifft, als besonders günstig erwiesen, wenn die Abrasivstoff-Teilchen zu überwiegenden Teilen plättchenartige, "planare" Form (Tablar-Form) aufweisen, wie im **Anspruch** 2 geoffenbart.

Es ist weiters - wie aus diesem Anspruch hervorgeht - und auch da dürfte dem erfindungsgemäß vorgesehenen Einsatz der oben spezifizierten Naturstoffe bzw. naturidenten Stoffe im Harz eine gewisse Rolle zukommen - von Vorteil, wenn es zu einer "planaren Ausrichtung" der Korundteilchen in Richtung der Erstreckung der Verschleißschicht kommt. Bei einer solchen verschleißschichts-konformen Ausrichtung der Korundpartikel ist die den Abrieb verhindernde Gesamtfläche dieser Teilchen besonders groß und im wesentlichen ist auf diese Weise zusätzlich auch ein "Herausragen" von scharfen Kanten und Spitzen der Hartstoffteilchen aus der Verschleißschicht-Außenfläche minimiert, was ja, siehe weiter oben, beim Verpressen der Laminate zu unerwünschten Beschädigungen der Stahlplatten der Pressen führen kann.

Schließlich sind im Anspruch 2 bevorzugte Teilchengrößen der Aluminiumoxid-Partikel genannt, wobei sich die Dimensionsangaben auf die jeweilige Größterstreckung der Partikel beziehen.

Insbesondere im Hinblick auf die optische Erscheinung der neuen hochabriebfesten Laminate kann eine Identität der in die gehärtete Harzmasse von Dekorbahn-lmprägnierung und in die Deckschicht integrierten Naturstoffe gemäß **Anspruch** 3 hilfreich sein, wobei für den Fall, daß Abweichungen im optischen Verhalten zwischen Kunstharz-Grundmasse und Naturstoff existieren, die Einhaltung identischer Mengengehalte an Naturstoff in der Dekor-Faserbahn-Imprägnierung und in der Verschleißschicht von Vorteil sein kann.

Bevorzugt sind in der Verschleißschicht Naturstoffe integriert, welche bezüglich ihres Heteropolysaccharid- bzw. Pektin-Gehaltes, den aus dem **Anspruch** 4 hervorgehenden Kriterien entsprechen.

Vom Standpunkt der Vermeidung eventuell zu erwartender, nachteiliger optischer Effekte aus besonders günstig ist es, wenn, wie gemäß **Anspruch** 5 vorgesehen, die von der Dekor-Faserbahn aufgenommene Harzmasse und die Masse-in-Masse integral an sie gebundene, die Abrasivstoff-Teilchen homogen verteilt enthaltende Masse praktisch identische optische Eigenschaften, also z.B. praktisch gleiche Brechungsindices aufweisen, wozu eine gezielte Abstimmung der Zusammensetzungen der Harze von Imprägnierung und Verschleißschicht vorteilhaft ist.

Bevorzugt sind Dicken der Verschleißschicht im Rahmen der im **Anspruch** 6 genannten Werte von 0,02 bis 0,15 mm, welche jeweils in Abstimmung mit den Korngrößen des Hartstoffs zu wählen sind. Bei diesen Dicken ist die hohe Verschleißfestigkeit voll gewährleistet und eine Schichtstärke gegeben, welche volle Biegeflexibilität auch bei hohen Druckwechselbedingungen garantiert.

Hierbei ist es bevorzugt, Mengenverhältnisse zwischen der Summe von Dekorbahn-Imprägniermasse plus-Verschleißschichtmasse und Dekorbahn vor ihrer Imprägnierung und Beaufschlagung einzuhalten, wie sie ebenfalls aus dem Anspruch 6 ersichtlich sind.

Einen weiteren wesentlichen Gegenstand der vorliegenden Erfindung bildet ein vorteilhaftes Verfahren zur Herstellung von Dekorlaminaten, Dekor-Laminatkörpern oder Dekorplatten gemäß einem der Ansprüche 1 bis 6, wobei eine zumindest einlagige Faserstoffbahn bzw. Papierbahn, (Trägerbahn) mit einer Lösung bzw. Dispersion bzw. Emulsion mindestens eines hitzehärtbaren Kunstharzes bzw. Melaminharzes getränkt wird und eine ein gewünschtes (Druck-)Dekor aufweisende Faserbahn bzw. Papierbahn mit einer zumindest ein Additiv und/oder einen Hilfsstoff enthaltenden Lösung bzw. Dispersion bzw. Emulsion mindestens eines hitzehärtbaren Kunstharzes bzw. Melaminharzes, dem mindestens ein Polysaccharid zugesetzt ist, getränkt und mit feinverteilten Partikeln eines Abrasivstoffes bzw. von α-Aluminiumoxid bzw. α-Korund beaufschlagt wird, indem die Faserbahn bzw. Trägerbahn in zwei zeitlich im wesentlichen unmittelbar aufeinanderfolgenden Verfahrensstufen mit Mischungen von natürliche Dispergierstoffe enthaltenden Harzkomposition und Abrasivstoffkomposition beaufschlagt wird und die, wie oben beschrieben, erhaltene, Trägerbahn nur mit der, wie soeben beschrieben, erhaltenen, mit Abrasivstoff beaufschlagten Dekorbahn verbunden wird oder beide zusammen mit der Oberfläche eines Substratkörpers bzw. einer Faser- bzw. Holzwerkstoffplatte unter Druckeinwirkung bei Harz-Härtungstemperatur verbunden werden.

Das Verfahren ist dadurch gekennzeichnet,
- dass die Dekorbahn durch eine erste Stufe mit Imprägnierbad mit einer wässerigen, von abrasionsresistenten Teilchen freien Suspension, Dispersion und/oder Emulsion mindestens eines hitzehärtbaren Kunstharzes bzw. Melaminharzes, mit mindestens einem Additiv und/oder Hilfsstoff,
   welcher Suspension od.dgl. gegebenenfalls eine durch Aufschließen, Erhitzen bzw. Kochen und Quellen eines Polysaccharid(e) enthaltenden bzw. an Polysaccharid(en) reichen Naturstoffs bzw. naturidenten Stoffs der im Anspruch 1 genannten Gruppe mit Wasser ohne oder mit Druck erhaltene Gel-Lösung, zugesetzt ist,
- geführt und die genannte Dekorbahn dort mit der genannten Harzdispersion bzw. Harzmischung getränkt bzw. imprägniert wird, und
- dass die so erhaltene, harzgetränkte Dekorbahn nach Durchlaufen einer Abstreifstufe zum Entfernen überschüssigen Harzgemisches im imprägnier-frischen, noch nassen Zustand im wesentlichen unmittelbar danach
- durch eine zweite Stufe mit Harz-Auftragseinrichtung - bevorzugt ein Drahtrakel - geführt wird, in welcher sie auf ihrer Dekor- bzw. Sichtseite
- mit einem Gemisch einer wässerigen Suspension, Dispersion und/oder Emulsion mindestens eines hitzehärtbaren Kunstharzes bzw. Melaminharzes mit einer durch Aufschließen, Erhitzen bzw. Kochen und Quellen eines Polysaccharid(e) enthaltenden bzw. an Polysaccharid(en) reichen Naturstoffs bzw. naturidenten Stoffs aus der im Anspruch 1 genannten Gruppe mit Wasser, mit oder ohne Druckbeaufschlagung, erhaltenen Gel-Lösung bzw. Gel-Mischung, welcher Mischung mindestens ein Additiv und/oder Hilfsstoff zugesetzt ist, beaufschlagt und beschichtet wird, wobei in dieser Mischung weiters eine jeweils gewünschte Menge an Abrasivstoff-Partikein bzw. α-Aluminium bzw. α-Korundpartikeln, eingearbeitet und homogen verteilt ist, beaufschlagt und beschichtet wird,
- wonach - nach einem Abstreifen überschüssigen Harzgemisches und ohne oder nach Zwischenschaltung einer Vor- bzw. Zwischentrocknung und/oder einer Vorhärtung - unter Einwirkung von Druck bei der jeweiligen Härtungstemperatur, die Vereinigung der so vorbehandelten Dekorbahn mit der ebenfalls mit hitzehärtbarem Harz imprägnierten Träger- bzw. Kembahn allein oder zusätzlich mit dem Substratkörper bzw. mit der Holzwerkstoffplatte vorgenommen wird.

Es handelt sich bei dem erfindungsgemäßen Verfahren um eine - an sich bekannte- Naß-in-Naß-Aufbringungstechnik der Harzkomponentenmischungen, deren zumindest eine, nämlich die außen aufzubringende verschleißfeste Schicht den oben definierten Naturstoff enthält. Außerdem sollen in der Auftragsmasse für diese Schicht die Hartstoff-Partikel fein und extrem homogen dispergiert vorliegen.

Die Homogenität und Stabilität der Teilchendispersion ist bei der erfindungsgemäßen Zwei-Stufen-Naß-in-Naß-Technik besonders wichtig, da hiebei eine Aufbringung der Teilchen-Kunstharz-Dispersion, z.B. durch Aufgießen, Streichen, Aufwalzen oder Aufsprühen derselben auf die direkt aus dem Imprägnierbad der ersten Stufe kommende, harzgetränkte Dekorbahn erfolgt, bei welchen Techniken eine Entmischung leicht eintritt.

Besonders bevorzugt ist es, den Auftrag der Verschleißschicht-Harzmasse, wie schon oben betont, mittels Drahtrakel vorzunehmen. Mit einem Drahtrakel läßt sich über Drehzahl, Anzahl der Drähte und Drehrichtung jeder gewünschte Harzauftrag genau einstellen. Diese Möglichkeit der genauen Steuerung ist auch wichtig, um die einzelnen Papiersorten ihren jeweiligen Eigenschaften gemäß beharzen zu können.

Eine z.B. aus der oben erwähnten US 3 135 643 A bekannte Entfernung überschüssigen Auftrags-Harzes mittels eines Messers ermöglicht keine echte on-line-Kontrolle des tatsächlichen Harzauftrags und läßt auch keine aktive Steuerung desselben zu.

Bevorzugte Ausführungsformen bezüglich der erfindungsgemäß einzusetzenden Materialien und Verfahrensbedingungen offenbaren die **Ansprüche** 8 bis 10.

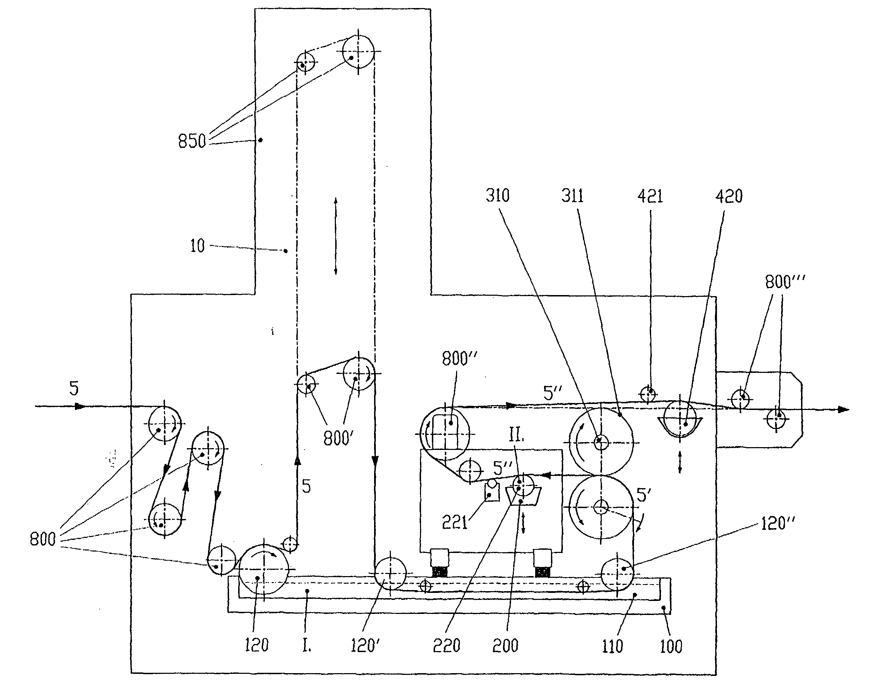

Zur näheren Erläuterung des Verfahrens zur Herstellung der neuen Dekorlaminate gemäß der Erfindung und einer dafür geeigneten Produktionseinrichtung wird auf die Zeichnung verwiesen, welche den Verfahrensablauf schematisch wiedergibt:

Von einer nicht gezeigten Dekorpapier-Rolle wird über einen Abwickler A die zu imprägnierende und verschleißfest zu beschichtende Dekorpapierbahn 5 über mehrere Führungswalzen 800 der Imprägnier- und Beschichtungsanlage 10 geführt und gelangt zur größeren, ersten Beaufschlagungswalze 120, welche unterseitig in das der länglichen lmprägnierwanne 100 der ersten Stufe I. kontinuierlich zugeführte Imprägnierharzgemisch 110 eintaucht, eine Schicht des lmprägniergemischs bei ihrer Drehung mitnimmt und auf die papierbahn 5 unterseitig aufträgt, so daß eine erste "Befeuchtung" derselben stattfindet. Die Bahn wird dann zur Konditionierung und zur Erhöhung ihrer Bereitschaft, Harz aufzunehmen, gegebenenfalls unter Anwendung leichter Zugkraft, über Walzen 800' geführt, um sie "atmen" zu lassen. Die Atemzone kann, wie in unterbrochenen Linien gezeichnet, auch länger sein und befindet sich dann in einem aufrechten Schacht 850. Dann gelangt die Bahn über die erste Badwalze 120' voll unter die Oberfläche der Harzmischung 110 in der Wanne 100, verbleibt für eine Strecke, welche einer lmprägnierzeit im Bereich von 2 bis 8s entspricht, im Harzbad und wird als imprägnierte, nasse Dekorbahn schließlich über die Walze 120" aus dem Bad 100, 110 geführt. Sie wird nach Passieren eines Dosierwalzenpaares 310 mit Abstreifer 311 über die in die Abrasivteilchen enthaltende Auftragsharzmasse 210 in der ARP (abrasion resistant particles)-Wanne 200 der zweiten Stufe II. eintauchende, rotierende Auftragswalze 220 geführt, wo sie sicht- bzw. druckseitig mit der Verschleißharzmasse 210 beaufschlagt wird. Eine Feinstverteilung erfolgt durch das Drahtrakel 221 quer über die Bahnbreite, dadurch kann auch die Auftragsmenge feinreguliert werden!

Über eine Umlenkwalze 800" und ein Drahtrakel 421 sowie eine höhenverstellbare Abstreifwalze mit Rakel 420 und weitere Walzen 800"' verläßt die nun auch mit der Verschleißbeschichtung versehene Dekorbahn 5" die Anlage und wird in den Trockentunnel T geführt und dort auf eine gewünschte "Restfeuchte" getrocknet.

Anhand der folgenden Beispiele 1 bis 3 sowie der Vorschrift im Anschluß daran wird die Erfindung näher erläutert.

### Beispiel 1: Dekor-Laminat für hochabriebfeste Bodenbeläge

Von einer Papierrolle wird kontinuierlich eine mit dem Bild der Oberfläche eines natürlichen Holzes bedruckte Papierbahn (Grammatur: 90 g/m²; Gurley-Wert: 20 s) abgezogen und über Führungswalzen durch eine kontinuierlich mit einer Harzmischung mit einer Zusammensetzung gemäß Tabelle 1 beschickte lmprägnierwanne geführt. Dabei dringt die Harzmischung von beiden Seiten in die Dekorbahn ein und bildet die Grundimprägnierung derselben. Die Tränkzeit (Verweilzeit) liegt bei 2,5 s.

**Tabelle 1:**

| "Rezept A"; | |
|---|---|
| Komponente: | Imprägniermischung Menge, kg |
| Melaminharz-Dispersion (ca. 60%) (Eigenrezept, siehe Vorschrift: Tabelle 7) | 200 |
| Trennmittel, handelsübl. (PAT-A 523) | 0,22 |
| Netzmittel, handelsübl. (Nu 47) | 0,5 |
| Härter, handelsübl. (529, BASF) | 0,4 |
| Modifikator (Eigenprodukt) | 12 |
| Wasser | 38 |

Knapp - etwa 4s - nach Verlassen dieses ersten lmprägnierbads wird von der nun getränkten Bahn überschüssige lmprägnierharzmasse in einer solchen Menge abgestreift, daß das Papier mit einer Beladung mit Kunstharz von etwa 65% ("trockenes" Harz), bezogen auf 100% Eigenmasse des Papiers (vor seiner Imprägnierung) schließlich die erste Stufe der Imprägnierung verläßt.

Möglichst unmittelbar danach, im noch unverändert imprägniernassen Zustand wird die Dekorbahn mit ihrer Dekor- bzw. Sichtseite über eine Harz-Auftragswalze geführt, welche auf ihrer der Dekorbahn abgewandten Seite in eine - kontinuierlich einer Tauchwanne aus einem Kessel zugeführte - Auftragsharzmasse zur Bildung der Verschleiß-Beschichtung mit einer aus der Tabelle 2 hervorgehenden Zusammensetzung eintaucht und bei ihrer Rotation kontinuierlich neue Auftragsharzmasse aufnimmt und an die über sie geführte, imprägnierte Dekorbahn abgibt.

**Tabelle 2:**

| Rezept B: | |
|---|---|
| Komponente: | Verschleißschicht-Auftragsmasse Menge, kg |
| Melaminharz-Dispersion (ca. 60%) | 175 |
| Netzmittel (Nu 47) | 0,4 |
| Härter (529 BASF) | 0,3 |
| Modifikator | 6 |
| Wasser | 2 |
| α-Korund, Tablar (PLAKOR 40) | |
| (Partikelgröße 10-50 µm) | 120 |
| Xanthan (1%-ig in Wasser) aufdispergiert | 10 |
| Premix (siehe extra Anrührvorschrift) | 10 |
| Silan (Dow Corning, Z 6020) | 2,5 |
| Essigsäure, konz. | 1 |
| Netzmittel (Hypersal VXT) | 0,4 |

### Anrührvorschrift für Premix:

150 Liter Wasser im Disperser mit 5 kg Cesa-Gum LN1 (Johannisbrot-Kernmehl) intensiv verrühren bis zu einer Temperatur von 90°C (ca. 3 Stunden lang, je nach Rührwerkstype).
Dann 200 Liter Wasser zugeben und unter Kühlung über den Behältermantel langsam weiter rühren, bis ca. 20°C erreicht sind.
Jetzt nochmals 50 Liter Wasser zugeben und 6,5 kg Härter 528 von BASF.

Nach Verlassen des Verschleißschicht-Auftragsbades passiert die Papierbahn eine Abstreifwalze mit Rakel zum Abstreifen überschüssiger Auftragsmasse.

Danach wird die nassbzw. feuchte, nunmehr imprägnierte und mit dem Verschleißschicht-Auftrag versehene Bahn in einem Trockentunnel mit Konvektionstrocknung bei ansteigenden Temperaturen von 140-190°C auf etwa 6-7% Restfeuchte getrocknet.

Die nun mit dem hitzehärtbarem Melaminharz getränkte, beschichtete und getrocknete Dekorpapierbahn wird zu Bögen geschnitten und diese werden gestapelt.

Die Beladung der Dekorpapier-Bahn mit eigener Harzimprägnierung und Verschleißschicht beträgt etwa 210%, gerechnet als Trockenmasse, bezogen auf die Masse (100%) des Dekorpapiers vor Harz-Imprägnierung und -Auftrag.

Zum Erhalt eines Laminats werden diese Dekor-Prepregbögen mit jeweils vier unterhalb von ihnen angeordneten Lagen von mit einem konventionellen Formaldehyd-Phenol- oder Formaldehyd-Hamstoffharz imprägnierten Natron-Kraftpapier - also mit vier sogenannten Kernpapierbögen - in einer Taktpresse bei z.B. 185°C und bei einem Druck von 20 bar zu einem Laminatfilm verpreßt.

Wenn erwünscht, kann mittels Strukturblech auf den Platten der Taktpresse ein reliefartiges Muster in die verschleißfest beschichtete Dekorseite eingepreßt werden.

Die so erhaltenen, fertigen Laminatbögen mit Dekorschicht und Kemlagenschicht können als solche an Kunden und Weiterverarbeiter abgegeben bzw. geliefert werden oder aber sie werden anschließend mit einer Holzwerkstoffplatte, z.B. Spanplatte, verpreßt, so daß der Laminatfilm innig mit einer Holzwerkstoffplatte od.dgl. als Unterlagskörper verbunden wird.

Um einen Verzug bzw. ein "Schüsseln" der so beschichteten Holzwerkstoffplatten zu vermeiden, wird - bevorzugt praktisch gleichzeitig mit dem o.a. Dekorschicht/Kernlagen-Laminat auf der Rückseite der Platte als "Gegenzug" ein ebenfalls mit hitzehärtbarem Harz imprägniertes Laminat meist aus mehreren Lagen Kraftpapier, wenn kein Dekor erwünscht oder nötig ist (z.B. für Laminate, die für den Innenausbau, wie Böden oder Täfelungen vorgesehen sind) oder mit einem Dekorschicht/Kernlagen-Laminat heiß aufgepreßt, wobei üblicherweise keine besondere Verschleißfestausrüstung erforderlich ist.

Proben der so erhaltenen Dekorlaminate bzw. deren Verschleißschicht brachten bei der Verschleißprüfung folgende Werte:

Taber-Abraser-Test; DIN EN Norm 438-2.6:

Rotierende, mit Schleifpapier versehene Räder werden mit einem definierten Druck gegen die zu prüfende Oberfläche des Probekörpers gepreßt. Sobald Beschädigungen der Dekorschicht auftreten, wird die Zahl der bis zu diesem Zeitpunkt erfolgten Umdrehungen des Probekörpers als Anfangspunkt, als sog. Initialpunkt (IP) gemessen und festgehalten.

Die Schleifbelastung wird fortgesetzt, bis die Dekorschicht zu 95% zerstört ist. Die bis zu diesem Zeitpunkt gemessenen Gesamtumdrehungen des Probekörpers gelten als Endabriebpunkt, als sog. Finalpunkt (FP).
- IP:: Umdrehungen: Je nach Maschinenfahrweise von 500 bis 15.000
- FP:: Wurde wegen der hohen Werte nicht festgestellt.

Die Beschichtung erweist sich bei einem betriebs-internen Test auf Widerstandsfähigkeit gegen Zigarettenglut als extrem glutfest.

Weiters ist trotz des hohen Füllgrads mit dem α-Korund hohe Wiedergabequalität des Holzmusters bis in alle Einzelheiten, wie Poren, und hohe Transparenz ohne Trübungen gegeben.

Die, wie oben beschrieben erhaltenen Dekorlaminate eignen sich besonders für Fußbodenbeläge mit extrem hohen Beanspruchungen, wie z.B. für Dielen, Büro- und Geschäftsräume.

### Beispiel 2: Laminat für Arbeitsplatten:

Das Beispiel 1 wurde im wesentlichen unter Einhaltung der dort genannten Bedingungen mit der gleichen Dekorpapierqualität wiederholt. Als Harzmasse für die Imprägnierung der Dekorpapier-Bahn diente eine solche, deren Grundzusammensetzung aus Tabelle 3 ersichtlich ist.

**Tabelle 3:**

| Rezept C: | |
|---|---|
| Komponente | Imprägnierharz 2 (03): Menge, kg |
| Melaminharz, siehe Vorschrift weiter unten | 250 |
| Trennmittel, handelsübl. (Pata 523) | 0,3 |
| Netzmittel, handelsübl. (Nu 47) | 1 |
| Härtermischung aus 2 Härtern, handelsübl. | 1,5 |
| Modifikator, siehe Anhang zu Tab 2 | 10 |
| Wasser | 45 |
| Gesamtmenge | 307,8 |
| (Trübungszeit: 20 min) | |

Die lmprägniermasse gemäß Tabelle 3 eignet sich besonders gut für die Herstellung von Laminatbögen für die Kurztaktpresse oder Rollen für die kontinuierliche Presse.

Die Oberflächenverschleiß-Beschichtung wurde mit der aus Tabelle 4 ersichtlichen Auftragsharzmasse gebildet:

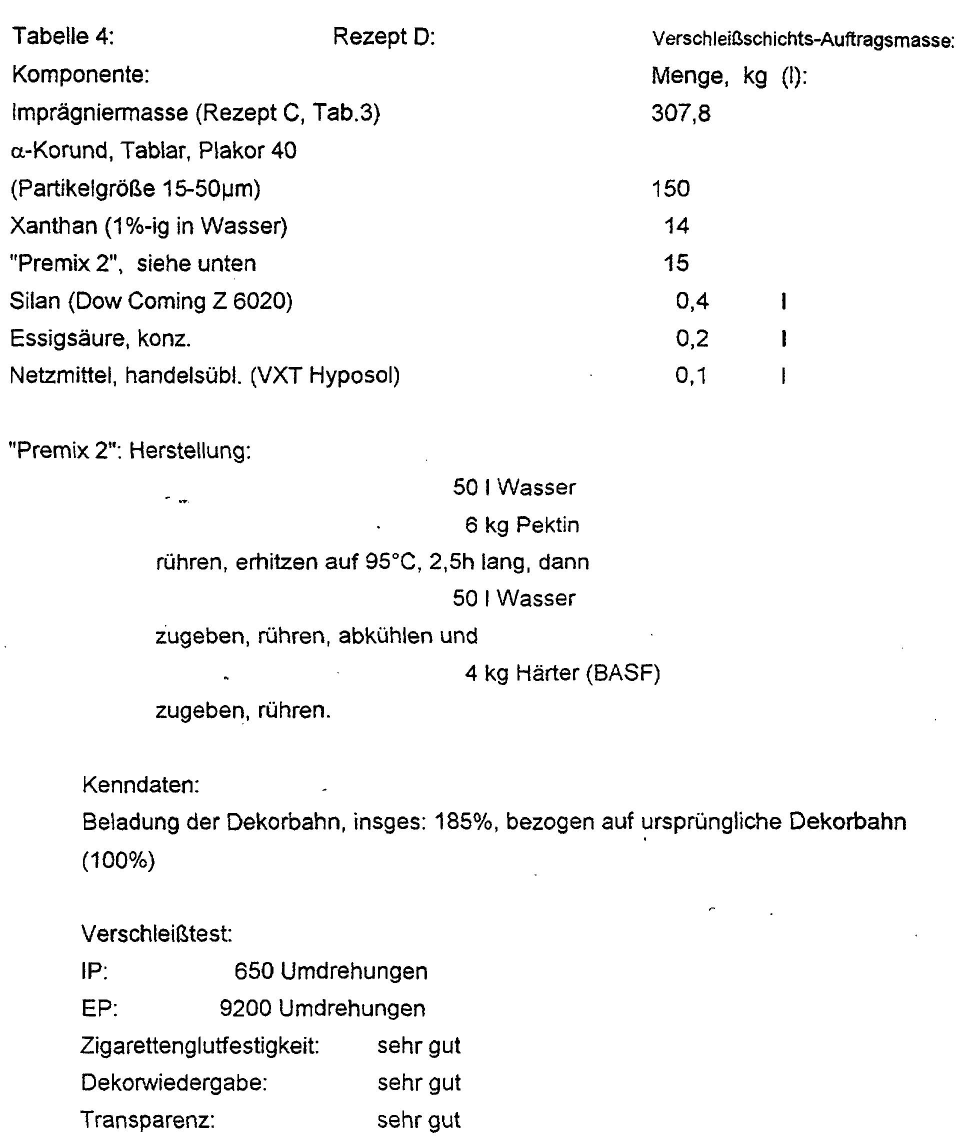

Mit diesem Dekorfilm gemäß Beispiel 1 hergestellte Dekor-Holzfaserplatten eignen sich hervorragend für Küchenarbeitsplatten, Verkaufstischplatten u.dgl. und zeigen bei hoher Beanspruchung eine durchschnittliche Haltbarkeits-Dauer in der Größenordnung von 5 bis 8 Jahren.

### Beispiel 3: Dekorlaminat für Möbelbau

Das Beispiel 1 wurde im wesentlichen unter Einhaltung der dort genannten Bedingungen wiederholt. Die Grundzusammensetzung der Dekorbahn-Imprägniermasse geht aus Tabelle 5 hervor:

**Tabelle 5.**

| Rezept E: | |
|---|---|
| Komponente | Imprägnierharz: Menge, kg: |
| Melaminharz | 200 |
| Trennmittel, handelsübl., (Pata 523) | 0,1 |
| Netzmittel, handelsübl., (Nu 47) | 0,5 |
| Härter, handelsübl., ( 529) | 0,4 |
| Modifikator | 10 |
| Wasser | 40 |
| Gesamtmenge | 251,0 |

Die lmprägniermasse ist besonders gut für die herstellung einzelner Dekor-Laminatbahnen bzw. -filme geeignet.

Als Auftragsmasse für die Bildung der abrasionsfesten Verschleiß-Oberflächenschicht diente die in der folgenden Tabelle 6 in ihrer Grundzusammensetzung angeführte Auftragsharzmasse.

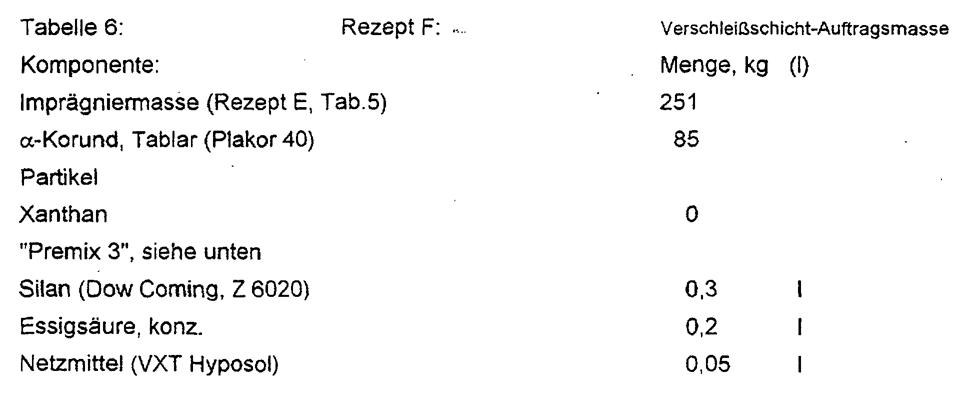

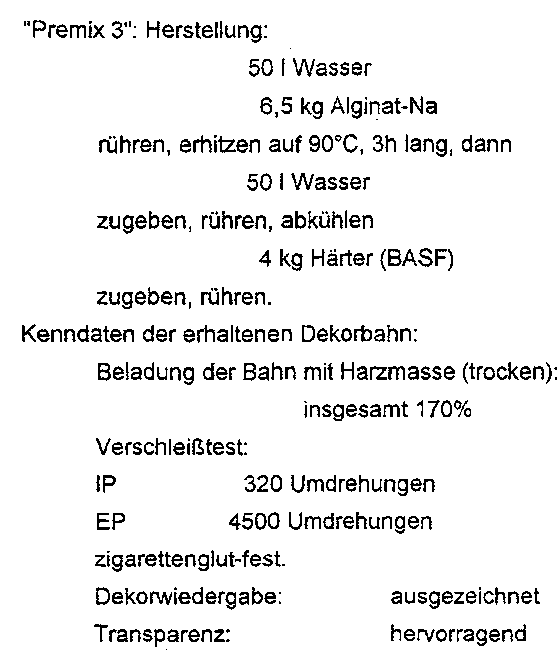

Mit dem so erhaltenen Dekorbahn-Prepreg unter den Bedingungen gemäß Beispiel 1 hergestellte Dekorplatten (Gesamtdicke etwa 20 mm) eignen sich besonders für hohen Ansprüchen entsprechende, senkrechte Flächen von Korpussen, Türen, Laden, Blenden u.dgl. von Büro-, Geschäfts-Möbeln und -Einrichtungen, gewerblichen Kücheneinrichtungen, Gaststätten u.dgl.

### Vorschrift: Herstellung des lmprägnierharzes, Melaminharz, Eigenrezept:

Es wurde eine Imprägnierharz-Dispersion mit einer der folgenden Tabelle 7 entnehmbaren Zusammensetzung in der dort wiedergegebenen Reihenfolge der Zugabe hergestellt:

**Tabelle 7:**

| Basis-Melaminharz, handelsüblich | |
|---|---|
| Komponente: | Menge: kg |
| Formalin, 37%-ig | 7500 |
| Wasser | 2000 |
| Natronlauge, konz. | 6,5 |
| Diethylenglykol (DEG) | 300 |
| Monoethylenglykol (MEG) | 550 |
| Melamin | 6500 |

pH Wert: 10, Erhitzung auf 90°C, 45 min lang, Lagertemperatur 30°C.

Die erhaltene Harzdispersionsbasis wurde bis zu ihrem Einsatz für die Herstellung der Massen gemäß den vorangegangenen Beispielen 1 bis 3 in einem Tank zwischengelagert!

### Herstellung des Modifikators:

| | |
|---|---|
| Monoethylenglykol | 12300 (kg) |
| Granuform (hochprozentiges Formalin geprillt) | 2370 |
| Melamin | 4000 |

Zwischenlagerung nach Kochung erfolgt im Tank.

## Patentansprüche

1. Dekorlaminat mit abriebfester Oberflächen-Beschichtung bzw. damit beschichtete(r) Substratkörper bzw. Dekorplatte, wobei das Laminat mit zumindest einer, Lage einer mit einem hitzegehärteten Kunstharz imprägnierten Faserstoff- und/oder Papierbahn (Träger- bzw. Kernbahn), und einer an sie gebundenen, ebenfalls derart imprägnierten und hitzegehärteten, mit einem Dekor versehenen, äußeren bzw. sicht- und gebrauchsseitigen Faserstoff- und/oder Papierbahn (Dekorbahn) gebildet ist, welche mit einer abrasionsresistent ausgerüsteten, hitzegehärteten Masse auf Basis mindestens eines hitzehärtbaren Kunstharzes bzw. Melaminharzes, dem mindestens ein Polysaccharid zugesetzt ist, mit mindestens einem Plastifizierungsmittel und/oder weiteren Additiven und/oder Hilfsstoffen beaufschlagt und imprägniert ist, wobei in der hitzegehärteten Kunstharzmasse der Dekorbahn Partikel mindestens eines abrasionsresistenten Hartstoffes bzw. von α-Aluminiumoxid bzw. α-Korund, verteilt sind, und wobei das Dekorlaminat mit einer - durch zwei im wesentlichen unmittelbar aufeinanderfolgende Materialaufträge mit einer Mischung von Harzkomposition und Abrasivstoffkomposition gebildeten - Matrix beaufschlagt ist, bzw. ein derartiges an einen Substratkörper bzw. an eine Bauplatte od.dgl. auf Basis von mit hitzegehärtetem Kunstharz gebundenen Faserstoff(en) oder holzfaser-gebundenes Dekorlaminat, **dadurch gekennzeichnet**,
- dass das genannte Dekorlaminat in Form eines Laminatbogens oder einer Laminatbahn
- von einer Matrix aus der hitzegehärteten Masse auf Basis mindestens eines hitzehärtbaren Kunstharzes oder aber mindestens eines derartigen Kunstharzes in Kombination mit mindestens einem, Polysaccharid(e) enthaltenden bzw. an Polysaccharid(en) reichen Naturstoff bzw. naturidenten Stoff aus der Gruppe Guarkern-Mehl, Mehl(e) von Topinambur, Zichorie oder Dahlie, Johannisbrotkern-Mehl, (Cesa-gum), Guargum, Gummi arabicum, Carrageen, Traganth, Agar Agar und Xanthan, besonders bevorzugt jedoch Johannisbrotkern-Mehl oder Xanthan und mindestens einem weiteren Additiv und/oder Hilfsstoff, jedoch ohne Gehalt an Abrasivstoff-Teilchen durchdrungen ist
- und die genannte, von der Dekorbahn aufgenommene bzw. absorbierte, abrasivstoff-freie Matrix grenzflächenlos einstückig
- in eine mit ihr integrale, die äußere Faserstoff- und/oder Papierbahn (Dekorbahn) nach außen bzw. sicht- und gebrauchsseitig abschließende, mit einer Kombination von hitzehärtbaren Kunstharz, mit mindestens einem Polysaccharid(e) enthaltenden bzw. an reichen Naturstoff bzw. naturidenten Stoff aus der oben genannten Gruppe und mindestens einem weiteren Additiv und/oder Hilfsstoff gebildete, klar-transparente Deck- und Verschleißschicht übergeht,
- wobei die polysaccharid-hältige, bzw. -reiche Naturstoff-Komponente in der hitzegehärteten Masse der Matrix in Mengen von 2 bis 30 Masse-%, bevorzugt von 5 bis 20 Masse-%, jeweils bezogen auf die Summe der Massen von hitzegehärtetem Harz, Naturstoff(en), Additiv(en) und/oder Hilfsstoff(en) und eventuell enthaltenen Hartstoff-Teilchen enthalten ist und
- wobei in der hitzegehärteten Masse der genannten, mit der Imprägnier-Matrix der Dekorbahn integralen Deck- und Verschleißschicht die Partikel des abrasionsfesten Hartstoffes bzw. α-Aluminiumoxid- bzw. α-Korund-Partikel verteilt sind.

2. Dekorlaminat nach Anspruch 1, **dadurch gekennzeichnet**,
- dass in der hitzegehärteten Masse der Deck- und Verschleißschicht der Dekorbahn α-Aluminiumoxid bzw. α-Korund mit abgeflachten, Tablarform aufweisenden Partikeln verteilt sind
- dass in der hitzegehärteten Masse der Deck- und Verschleißschicht der Dekorbahn, die in ihr verteilten, Tablarform aufweisenden α-Aluminiumoxid- bzw. α-Korund-Partikel zueinander im wesentlichen parallel zur Ebene der Erstreckung der genannten Schicht ausgerichtet sind und
- dass die genannten, Tablarform aufweisenden α-Aluminiumoxid- bzw. α-Korundpartikel, jeweils bezogen auf ihre maximale Querschnittserstreckung, Teilchengrößen im Bereich von 5 bis 50 µm, bevorzugt von 15 bis 40 µm, aufweisen und
- dass die α-Aluminiumoxid- bzw. α-Korund-Partikel in der hitzegehärteten Masse der Deck- und Verschleißschicht der Dekorbahn in Mengen von 5 bis 65 Masse-%, vorzugsweise von 15 bis 50 Masse-%, jeweils bezogen auf die Summe der Trocken-Massen von hitzegehärtetem Harz plus polysaccharid-haltigem bzw. - reichem Naturstoff bzw. naturidentem Stoff plus α-Aluminiumoxid bzw. α-Korund plus Additiv(en) und/oder Hilfsmittel(n) vorliegen.

3. Dekorlaminat nach Anspruch 1 oder 2, **dadurch gekennzeichnet**,
- dass in der hitzegehärteten Matrix der Imprägnierung der Dekorbahn ein polysaccharid-haltiger bzw. -reicher Naturstoff bzw. naturidenter Stoff aus der im Anspruch 1 genannten Gruppe enthalten ist, welcher mit dem in der hitzegehärteten, Deck- und Verschleißschicht derselben vorhandenen Naturstoff bzw. naturidenten Stoff aus der genannten Gruppe identisch ist und/oder
- dass die Mengenverhältnisse von Kunstharz und polysaccharid-haltigem bzw. - reichem Naturstoff bzw. naturidenten Stoff aus der genannten Gruppe zueinander in der die hitzegehärtete Matrix der Imprägnierung der Dekorbahn bildenden Kunstharz-Naturstoff-Kombinationsmasse einerseits und in der die hitzegehärtete, abrasionsfeste Deckschicht derselben bildenden Kunstharz-Naturstoff-Kombinationsmasse andererseits, untereinander im wesentlichen identisch sind.

4. Dekorlaminat nach einem der Ansprüche 1 bis 3, **dadurch gekennzeichnet**,
- dass die hitzegehärtete Masse zumindest der Deck- und Verschleißschicht der Dekorbahn mit mindestens einem hitzehärtbaren Kunstharz bzw. Melaminharz in Kombination mit mindestens einem polysaccharid-haltigen bzw. -reichen Naturstoff bzw. naturidenten Stoff aus der im Anspruch 1 genannten Gruppe, mit einem Gehalt von mindestens 10 Masse-%, bevorzugt von mindestens 25 Masse-%, an Glucuronsäure(n), Mannuronsäure(n), Hyaluronsäure(n), Galakturonsäure(n), Pektin(en) und/oder Inulin gebildet ist.

5. Dekorlaminat nach einem der Ansprüche 1 bis 4, **dadurch gekennzeichnet**,
- dass die optischen Eigenschaften der hitzegehärteten Kunstharzmatrix der Imprägnierung der Dekorbahn mit jenen der die integrale, hitzegehärtete, abrasionsfeste Deckschicht derselben bildenden Kunstharz-Naturstoff-Kombinationsmasse im wesentlichen identisch sind.

6. Dekorlaminat nach einem der Ansprüche 1 bis 5, **dadurch gekennzeichnet**,
- dass die Deck- und Verschleißschicht der Dekorbahn eine durchschnittliche Dicke von 0,05 bis 0,15 mm aufweist und
- dass die Gesamtbeladung der Dekorbahn mit hitzegehärtetem Harz, Naturstoff bzw. naturidentem Stoff, Abrasivstoff-Teilchen, Additiv(en) und/oder Hilfsmittel(n) 80 bis 240%, bevorzugt 100 bis 200%, der Masse der Dekorbahn allein beträgt.

7. Verfahren zur Herstellung von Dekorlaminaten, Dekor-Laminatkörpern oder Dekorplatten gemäß einem der Ansprüche 1 bis 6, wobei eine zumindest einlagige Faserstoffbahn bzw. Papierbahn, (Trägerbahn) mit einer Lösung bzw. Dispersion bzw. Emulsion mindestens eines hitzehärtbaren Kunstharzes bzw. Melaminharzes getränkt wird und eine ein gewünschtes (Druck-)Dekor aufweisende Faserbahn bzw. Papierbahn mit einer zumindest ein Additiv und/oder einen Hilfsstoff enthaltenden Lösung bzw. Dispersion bzw. Emulsion mindestens eines hitzehärtbaren Kunstharzes bzw. Melaminharzes, dem mindestens ein Polysaccharid zugesetzt ist, getränkt und mit feinverteilten Partikeln eines Abrasivstoffes bzw. von α-Aluminiumoxid bzw. α-Korund beaufschlagt wird, indem die Faserbahn bzw. Trägerbahn in zwei zeitlich im wesentlichen unmittelbar aufeinanderfolgenden Verfahrensstufen mit Mischungen von natürliche Dispergierstoffe enthaltenden Harzkomposition und Abrasivstoffkomposition beaufschlagt wird und die, wie oben beschrieben, erhaltene, Trägerbahn nur mit der, wie soeben beschrieben, erhaltenen, mit Abrasivstoff beaufschlagten Dekorbahn verbunden wird oder beide zusammen mit der Oberfläche eines Substratkörpers bzw. einer Faser- bzw. Holzwerkstoffplatte unter Druckeinwirkung bei Harz-Härtungstemperatur verbunden werden,**dadurch gekennzeichnet**,
- dass die Dekorbahn durch eine erste Stufe mit Imprägnierbad mit einer wässerigen, von abrasionsresistenten Teilchen freien Suspension, Dispersion und/oder Emulsion mindestens eines hitzehärtbaren Kunstharzes bzw. Melaminharzes, mit mindestens einem Additiv und/oder Hilfsstoff,
welcher Suspension od.dgl. gegebenenfalls eine durch Aufschließen, Erhitzen bzw. Kochen und Quellen eines Polysaccharid(e) enthaltenden bzw. an Polysaccharid(en) reichen Naturstoffs bzw. naturidenten Stoffs der im Anspruch 1 genannten Gruppe mit Wasser ohne oder mit Druck erhaltene Gel-Lösung, zugesetzt ist,
- geführt und die genannte Dekorbahn dort mit der genannten Harzdispersion bzw. Harzmischung getränkt bzw. imprägniert wird, und
- dass die so erhaltene, harzgetränkte Dekorbahn nach Durchlaufen einer Abstreifstufe zum Entfernen überschüssigen Harzgemisches im imprägnierfrischen, noch nassen Zustand im wesentlichen unmittelbar danach
- durch eine zweite Stufe mit Harz-Auftragseinrichtung - bevorzugt ein Drahtrakel - geführt wird, in welcher sie auf ihrer Dekor- bzw. Sichtseite
- mit einem Gemisch einer wässerigen Suspension, Dispersion und/oder Emulsion mindestens eines hitzehärtbaren Kunstharzes bzw. Melaminharzes mit einer durch Aufschließen, Erhitzen bzw. Kochen und Quellen eines Polysaccharid(e) enthaltenden bzw. an Polysaccharid(en) reichen Naturstoffs bzw. naturidenten Stoffs aus der im Anspruch 1 genannten Gruppe mit Wasser, mit oder ohne Druckbeaufschlagung, erhaltenen Gel-Lösung bzw. Gel-Mischung, welcher Mischung mindestens ein Additiv und/oder Hilfsstoff zugesetzt ist, beaufschlagt und beschichtet wird, wobei in dieser Mischung weiters eine jeweils gewünschte Menge an Abrasivstoff-Partikeln bzw. α-Aluminium bzw. α-Korundpartikeln, eingearbeitet und homogen verteilt ist, beaufschlagt und beschichtet wird,
- wonach - nach einem Abstreifen überschüssigen Harzgemisches und ohne oder nach Zwischenschaltung einer Vor- bzw. Zwischentrocknung und/oder einer Vorhärtung - unter Einwirkung von Druck bei der jeweiligen Härtungstemperatur, die Vereinigung der so vorbehandelten Dekorbahn mit der ebenfalls mit hitzehärtbarem Harz imprägnierten Träger- bzw. Kembahn allein oder zusätzlich mit dem Substratkörper bzw. mit der Holzwerkstoffplatte vorgenommen wird.

8. Verfahren nach Anspruch 7, **dadurch gekennzeichnet**,
- dass eine Dekorbahn auf Basis eines Cellulosepapiers mit einer Grammatur bzw. einem Flächengewicht von 60 bis 120 g/cm² und einem Gurley-Wert von 10 bis 30s, bevorzugt von 15 bis 25s, eingesetzt wird.

9. Verfahren nach Anspruch 7 oder 8, **dadurch gekennzeichnet**,
- dass - für den Fall einer Imprägnierung der Dekorbahn in der ersten Stufe mit einem Harzdispersions-Naturstoff-Gemisch - der in demselben eingesetzte polysaccharid-haltige Naturstoff bzw. naturidente Stoff und der in der zweiten Verfahrensstufe der Beaufschlagung mit dem für die Bildung der Verschleißschicht vorgesehenen Harzdispersions-Naturstoff-Abrasivstoffpartikel-Gemisch eingesetzten polysaccharid-haltigen Naturstoff bzw. naturidenten Stoff miteinander im wesentlichen identisch sind und/oder
- dass jeweils die Basis-Harzdispersionen bzw. Melaminharzdispersionen des in der ersten Stufe eingesetzten Imprägnier-Harzgemischs und des in der zweiten Stufe eingesetzten Verschleißschicht-Harzgemischs miteinander im wesentlichen identisch sind.

10. Verfahren nach einem der Ansprüche 7 bis 9, **dadurch gekennzeichnet**,
- dass in der ersten Stufe im Verlauf der Imprägnierung der Dekorbahn und/oder in der zweiten Stufe im Verlauf der Verschleißschicht-Aufbringung in den dafür vorgesehenen Kunstharzmassen zumindest einer (eine) der im Anspruch 1 genannten Naturstoffe und/oder einer der im Anspruch 2 genannten und näher spezifizierten Abrasivstoffe eingesetzt wird bzw. werden.

## Claims

1. A decorative laminate with abrasion-resistant surface coating or substrate body coated therewith or decorative plate, the laminate being formed of at least one layer of a fibrous material and/or paper web (carrier web or core web) impregnated with a thermoset synthetic resin, and of a fibrous material or paper web (decorative web) on the outside or visible and usable side provided with decoration and bonded thereto, the said fibrous material or paper web also being impregnated and thermoset in this way and acted upon and impregnated with an abrasion-resistant, thermoset mass based on at least one thermosetting synthetic resin or melamine resin to which at least one polysaccharide has been added, with at least one plasticiser and/or other additives and/or auxiliary substances, particles of at least one abrasion-resistant solid substance or of α-aluminium oxide or α-corundum being distributed in the thermoset synthetic-resin mass of the decorative web, and the decorative laminate being acted upon with a matrix formed from two applications - one substantially immediately after the other - of a mixture of resin composition and abrasive composition, or a decorative laminate of this type bonded to a substrate body or to a structural plate or similar on the basis of fibrous material or fibrous materials bonded to thermoset resin or wood-fibre bonded decorative laminate, **characterised in that**
- the aforementioned decorative laminate in the form of a laminate sheet or laminate web
- is permeated with a matrix composed of the thermoset mass on the basis of at least one thermosetting synthetic resin of this type in combination with at least one natural substance, or substance identical to the natural one, containing polysaccharide(s) or rich in polysaccharide(s) from the group guar-seed flour, flour(s) of Jerusalem artichoke, chicory or dahlia, carob-seed flour, (cesa gum), guar gum, gum arabic, carrageen, tragacanth gum, agar agar and xanthan, but especially preferably carob-seed flour or xanthan and at least one other additive and/or auxiliary substance, but containing no abrasive particles
- and the aforementioned abrasive-free matrix taken up or absorbed by the decorative web, without a defining boundary and in a single piece
- undergoes transition into a transparent covering and abrasion layer integral therewith, which occludes the external fibrous-material web and/or paper web (decorative web) towards the outside or on the visible or usable side and is formed of a combination of thermosetting synthetic resin, with at least one natural substance or substance identical to the natural one of the above-mentioned group containing polysaccharides or rich in the same, and of at least one other additive and/or auxiliary substance,
- the polysaccharide-containing or polysaccharide-rich natural substance constituent being contained in the thermoset mass of the matrix in quantities of 2 to 30% by mass, preferably of 5 to 20% by mass, in each case relative to the sum of the masses of thermoset resin, natural substance(s), additive(s) and/or auxiliary substance(s) and any solid particles they may contain, and
- the particles of the abrasion-resistant solid substance or α-aluminium oxide or α-corundum particles being distributed in the thermoset mass of the aforementioned covering and abrasion layer integral with the impregnation matrix of the decorative web.

2. A decorative laminate according to Claim 1, **characterised in that**
- α-aluminium oxide or α-corundum particles of a flattened, oblong shape are distributed in the thermoset mass of the covering and abrasion layer of the decorative web
- the α-aluminium oxide or α-corundum particles with a flattened, oblong shape distributed in the thermoset mass of the covering and abrasion layer of the decorative web are aligned with one another substantially parallel to the plane of the extension of the aforementioned layer and
- the aforementioned oblong α-aluminium oxide or α-corundum particles are in the region of 5 to 50 µm, preferably 15 to 40 µm in size, in each case referring to their maximum cross-section, and
- the α-aluminium oxide or α-corundum particles are present in the thermoset mass of the covering and abrasion layer of the decorative web in quantities of 5 to 65% by mass, preferably of 15 to 50% by mass, in each case relative to the sum of the dry masses of thermoset resin plus polysaccharide-containing or polysaccharide-rich natural substance or substance identical to the natural one plus α-aluminium oxide or α-corundum plus additive(s) and/or auxiliary substance(s).

3. A decorative laminate according to Claim 1 or 2, **characterised in that**
- a polysaccharide-containing or polysaccharide-rich natural substance or substance identical to the natural one from the group mentioned in Claim 1 is contained in the thermoset impregnation matrix of the decorative web, the said substance being identical to the natural substance or substance identical to the natural one of the aforementioned group present in the contained in the thermoset covering and abrasion layer of the decorative web and/or
- the quantity ratios of synthetic resin and polysaccharide-containing or polysaccharide-rich natural substance or substance identical to the natural one from the aforementioned group relative to one another on the one hand in the synthetic resin-natural substance combination mass forming the impregnation matrix of the decorative web and on the other hand in the synthetic resin-natural substance combination mass forming the thermoset abrasion-resistant covering layer are substantially identical to one another.

4. A decorative laminate according to one of Claims 1 to 3, **characterised in that**
- the thermoset mass at least of the covering and abrasion layer of the decorative web with at least one thermosetting synthetic resin or melamine resin in combination with at least one polysaccharide-containing or polysaccharide-rich natural substance or substance identical to the natural one from the group mentioned in Claim 1, with a content of at least 10% by mass, preferably at least 25% by mass, is formed from glucuronic acid(s), mannuronic acid(s), hyaluronic acid(s), galacturonic acid(s), pectin(s) and/or inulin.

5. A decorative laminate according to one of Claims 1 to 4, **characterised in that**
- the optical properties of the thermoset synthetic-resin impregnation matrix of the decorative web are substantially identical to those of the synthetic resin-natural substance combination mass forming the integral, thermoset abrasion-resistant covering layer of the said decorative web.

6. A decorative laminate according to one of Claims 1 to 5, **characterised in that**
- the covering and abrasion layer of the decorative web has a mean thickness of 0.05 to 0.15 mm and
- the total charging of the decorative web with thermoset resin, natural substance or substance identical to the natural one, abrasive particles, additive(s) and/or auxiliary substance(s) amounts to 80 to 240%, preferably 100 to 200%, of the mass of the decorative web alone.

7. A method of manufacturing decorative laminates, decorative-laminate bodies or decorative plate according to one of Claims 1 to 6, in which an at least single-layer web of fibrous material or paper (carrier web) is saturated with a solution or dispersion or emulsion of at least one thermosetting synthetic resin or melamine resin, and a fibre web or paper web decorated (printed) as desired is saturated with a solution or dispersion or emulsion of at least one thermosetting synthetic resin or melamine resin containing at least one additive and/or auxiliary substance, to which at least one polysaccharide has been added, and acted upon with finely distributed particles of an abrasive or of α-aluminium oxide or α-corundum, while the fibre web or carrier web is acted upon in two substantially immediately successive stages of the method with mixtures of natural dispersant-containing resin composition and abrasive composition, and the carrier web obtained, as described above, is bonded only to the decorative web obtained as just described, which has been acted upon with abrasive, or both together are bonded to the surface of a substrate body or a fibre plate or derived timber-product plate under the effect of pressure at a resin-setting temperature, **characterised in that**
- the decorative web is guided through a first stage with impregnation bath with an aqueous, abrasion-resistant particle-free suspension, dispersion and/or emulsion of at least one thermosetting synthetic resin or melamine resin, with at least one additive and/or auxiliary substance,
- a gel solution obtained with water with or without pressure by opening up, heating or boiling, and swelling of a natural substance or substance identical to the natural one in the group mentioned in Claim 1 and containing polysaccharides or rich in polysaccharides is added to the said suspension or similar,
- and the aforementioned decorative web is there saturated or impregnated with the resin dispersion or resin mixture, and
- substantially immediately after passing through a wipe-off stage to remove excessive resin in the impregnation-fresh, still wet state, the resin-saturated decorative web thus obtained is guided through a second stage with a resin coating device - preferably a wire doctor - in which, on its detector or visible side,
- it is acted upon and coated with a mixture of an aqueous suspension, dispersion and/or emulsion of at least one thermosetting synthetic resin or melamine resin with a gel solution or gel mixture obtained with water with or without the action of pressure by opening up, heating or boiling, and swelling of a natural substance or substance identical to the natural one in the group mentioned in Claim 1 and containing polysaccharides or rich in polysaccharides, at least one additive and/or auxiliary substance being added to this mixture, into which any desired quantity of abrasive particles or α-aluminium oxide or α-corundum particles has also been incorporated and homogeneously distributed.
- whereafter, after excessive resin mixture has been wiped off, and without or following interpolation of prior or intermediate drying and/or prior hardening, the decorative web thus pre-treated is united, either alone or additionally with the substrate body or the derived timber-product plate, with the similarly thermosetting resin-impregnated carrier web or core web.

8. A method according to Claim 7, **characterised in that**
- a decorative web based on a cellulose paper with a grammage or basis weight of 60 to 120 g/cm² and a Gurley value of 10 to 30s, preferably of 15 to 25s, is used.

9. A method according to Claim 7 or 8, **characterised in that**
- for impregnation of the decorative web in the first stage of the method with a resin dispersion-natural substance mixture, the polysaccharide-containing natural substance or substance identical to the natural one, which is used in the said mixture, and the polysaccharide-containing natural substance or substance identical to the natural one used in the second stage - of the decorative web being acted upon with the mixture of resin dispersion-natural substance-abrasive particles provided for formation of the abrasion layer - are substantially identical to one another, and/or
- in each case the base-resin dispersions or melamine dispersions of the impregnation resin mixture used in the first stage and the abrasion layer-resin mixture used in the second stage are substantially identical to one another.

10. A method according to one of Claims 7 to 9, **characterised in that**
- at least one of the natural substances mentioned in Claim 1 and/or one of the abrasives mentioned in Claim 2 and specified in greater detail is or are used in the first stage in the course of impregnation of the decorative web and in the second stage in the course of abrasion-layer application in the synthetic-resin masses intended for this purpose.

## Revendications

1. Laminé décoratif avec un revêtement de surface résistant à l'abrasion ou un corps de support ou une plaque décorative revêtu(e) de ce revêtement, dans lequel le laminé est formé d'au moins une couche d'une bande de matériau fibreux et/ou de papier imprégnée d'une résine synthétique durcie à chaud (bande de support ou bande centrale) et d'une bande de matériau fibreux et/ou de papier (bande décorative) extérieure ou placée côté visuel et côté utilisation reliée à la première bande, également imprégnée et durcie à chaud de la même manière et pourvue d'une décoration, cette dernière bande étant alimentée et imprégnée par une masse résistant à l'abrasion, durcie à chaud, à base d'au moins une résine synthétique ou une résine mélamine thermodurcissable, à laquelle a été ajouté au moins un polysaccharide, avec au moins un agent plastifiant et/ou d'autres additifs et/ou d'autres agents auxiliaires, dans lequel sont disséminées, dans la masse de résine synthétique durcie à chaud de la bande décorative, des particules d'au moins une substance dure résistant à l'abrasion ou d'oxyde aluminium ou corindons, et dans lequel le laminé décoratif est alimenté par une matrice - formée par deux applications de matériau qui se suivent sensiblement directement avec un mélange de composition de résine et de composition de matériau abrasif, ou un laminé décoratif de ce type relié à un corps de support ou à une plaque structurelle ou analogues à base d'un ou plusieurs matériaux fibreux reliés à de la résine synthétique durcie à chaud ou un laminé décoratif relié à des fibres de bois, **caractérisé en ce que** :
- le laminé décoratif mentionné sous la forme d'une feuille laminée ou d'une bande laminée
- est pénétré par une matrice constituée de la masse durcie à chaud à base d'au moins une résine synthétique thermodurcissable, mais au moins d'une résine synthétique de ce type en combinaison avec au moins un matériau naturel ou synthétique similaire contenant un ou plusieurs polysaccharides, respectivement riche en polysaccharide(s), choisi dans le groupe de la farine de noyaux guar, d'une ou de farines de topinambour, des chicorées ou des dahlias, de la farine de caroube, de la gomme Cesa, de la gomme guar, de la gomme arabique, du carragheen, de tragacanthe, de l'agar agar et du xanthane, mais de façon particulièrement préférée de la farine de caroube ou du xanthane et, un autre additif et/ou un autre agent auxiliaire, mais sans teneur en particules abrasives, et
- la matrice mentionnée exempte de matériau abrasif et absorbée par la bande de papier décorative se convertit d'un seul tenant sans interface
- en une couche de recouvrement et d'usure transparente claire d'un seul tenant avec la matrice, délimitant la bande extérieure de matériau fibreux et/ou de papier (bande décorative) vers l'extérieur ou côté visuel et côté usage, avec une combinaison de résine synthétique thermodurcissable, avec au moins un matériau naturel ou synthétique similaire contenant un ou des polysaccharides ou riche en polysaccharide(s), respectivement, choisi parmi le groupe précité, ladite au moins une couche de recouvrement et d'usure transparente claire étant formée d'un autre additif et/ou d'un matériau auxiliaire,
- dans lequel le composant de matériau naturel contenant des polysaccharides ou riche en polysaccharide(s) est contenu dans la masse thermodurcie de la matrice en quantité de 2 à 30% en masse, de préférence de 5 à 20% en masse, respectivement par rapport à la somme des masses de résine thermodurcie, de matériau(x) naturel(s), d'additif(s) et/ou de matériau(x) auxiliaire(s) et de particules de matériaux durs éventuellement contenues, et
- dans lequel, dans la masse thermodurcie de la couche de recouvrement et d'usure mentionnée d'un seul tenant avec la matrice d'imprégnation de la bande décorative, les particules du matériau dur ou d'oxyde d'α-aluminium ou les particules d'α-corindon résistant à l'abrasion sont réparties.

2. Laminé décoratif selon la revendication 1, **caractérisé en ce que** :
- sont réparties dans la masse thermodurcie de la couche de recouvrement et d'usure de la bande décorative, des particules aplatie à base d'oxyde d'α-aluminium et/ou d'α-corindon de forme tabulaire,
- dans la masse thermodurcie de la couche de recouvrement et d'usure de la bande décorative, les particules d'oxyde d'α-aluminium et d'α-corindon qui y sont réparties et se présentent sous une forme tabulaire sont dirigées les unes par rapport aux autres sensiblement parallèlement au plan de l'extension de la couche mentionnée, et
- les particules mentionnées d'oxyde d'α-aluminium ou d'α-corindon présentant une forme tabulaire présentent, respectivement par rapport à leur extension en coupe transversale maximale, des tailles particulaires dans la plage de 5 à 50 micramètres, de préférence de 15 à 40 micromètres, et
- les particules d'oxyde d'α-aluminium ou d'α-corindon de la masse thermodurcie de la couche de recouvrement et d'usure de la bande décorative sont présentes en quantité de 5 à 65% en masse, de préférence de 15 à 50% en masse, respectivement par rapport à la somme des masses sèches de la résine thermodurcie plus le matériau naturel ou synthétique similaire contenant des polysaccharides ou riche en polysaccharide(s), respectivement plus de l'oxyde d'α-aluminium ou de l'α-corindon plus un ou des additifs et/ou des matériaux auxiliaires.

3. Laminé décoratif selon la revendication 1 ou 2, **caractérisé en ce que** :
- dans la matrice thermodurcie formée par l'imprégnation de la bande décorative est contenu un matériau naturel ou synthétique similaire contenant des polysaccharides ou riche en polysaccharides choisi dans le groupe mentionné dans la revendication 1, qui est identique au matériau naturel ou synthétique similaire présent dans la couche de recouvrement et d'usure thermodurcie elle-même du groupe précité, et/ou
- les rapports quantitatifs de résine synthétique et de matériau naturel ou synthétique similaire contenant des polysaccharides ou riche en polysaccharides choisi dans le groupe mentionné sont sensiblement identiques l'une par rapport à l'autre dans la masse de combinaison résine synthétique/matériau naturel formant la matrice thermodurcie due à l'imprégnation de la bande décorative, d'une part, et dans la masse combinée de résine synthétique/matériau naturel formant la couche de recouvrement résistant à l'abrasion et thermodurcie de celle-ci, d'autre part.

4. Laminé décoratif selon l'une quelconque des revendications 1 à 3, **caractérisé en ce que** :
- la masse thermodurcie d'au moins la couche de recouvrement et d'usure de la bande décorative est formée d'au moins une résine synthétique ou d'une résine mélamine thermodurcissable en combinaison avec au moins un matériau naturel ou synthétique similaire contenant des polysaccharides ou riche en polysaccharides choisi dans le groupe mentionné dans la revendication 1, avec une teneur d'au moins 10% en masse, de préférence d'au moins 25% en masse, en acide glucoronique, en acide mannuronique, en acide hyaluronique, en acide galacturonique, en pectine et/ ou inuline.

5. Laminé décoratif selon l'une quelconque des revendications 1 à 4, **caractérisé en ce que** :
- les propriétés optiques de la matrice de résine synthétique thermodurcie dues à l'imprégnation de la bande décorative sont sensiblement identiques à celles de la masse combinée de résine synthétique/matériau naturel formant la couche d'usure intégrale résistant à l'abrasion et thermodurcie de celle-ci.

6. Laminé décoratif selon l'une quelconque des revendications 1 à 5, **caractérisé en ce que** :
- la couche de recouvrement et d'usure de la bande décorative présente une épaisseur moyenne de 0,5 à 0,15 mm, et
- la charge totale de la bande décorative en résine thermodurcie, en matériau naturel ou matériau synthétique similaire, en particules de matériau abrasif, en additif(s) et/ou en matériaux auxiliaires, s'élève à 80 à 240%, de préférence à 100 à 200%, de la masse de la bande décorative seule.

7. Procédé de fabrication de laminé décoratif, de corps de laminé décoratif ou de plaques décoratives selon l'une quelconque des revendications 1 à 6, dans lequel une bande de matériau fibreux ou de papier au moins en une seule couche (bande de support) est imprégnée d'une solution ou d'une dispersion ou d'une émulsion d'au moins une résine synthétique thermodurcissable ou d'une résine mélamine et une bande de matériau fibreux ou de papier présentant une décoration (par impression) souhaitée est imbibée d'une solution ou d'une dispersion ou d'une émulsion, contenant au moins un additif et/ou un agent auxiliaire, d'au moins une résine synthétique ou une résine mélamine thermodurcissable à laquelle est ajouté au moins un polysaccharide, et est alimentée par des particules finement disséminées de matériau abrasif ou d'oxyde d'α-aluminium et d'α-corindon, en alimentant la bande de matériau fibreux ou la bande de support, dans deux étapes de procédé qui se suivent sensiblement directement dans le temps, par des mélanges de compositions de résines contenant des dispersions naturelles et une composition de matériau abrasif et en reliant la bande de support obtenue comme décrit ci-dessus uniquement à la bande décorative obtenue que l'on vient de décrire et qui est alimentée en matériau abrasif ou en reliant les deux conjointement à la surface d'un corps de support ou d'une plaque de matériau en fibres ou en bois par intervention de la pression à une température de durcissement de résine, **caractérisé en ce que** :
- la bande décorative est acheminée à travers une première étape avec un bain d'imprégnation contenant une suspension, une dispersion et/ou une émulsion aqueuse d'au moins une résine synthétique ou d'une résine mélamine thermodurcissable, exempte de particules résistant à l'abrasion, avec au moins un additif et/ou un matériau auxiliaire,
- ladite suspension ou analogue se voyant éventuellement ajouter une solution de gel obtenue avec de l'eau sans ou avec application d'une pression par dissolution, chauffage ou cuisson et gonflement d'un matériau naturel contenant un ou des polysaccharides ou riche en polysaccharide(s) ou d'un matériau de type naturel ou synthétique similaire choisi dans le groupe mentionné dans la revendication 1, et
- la bande décorative mentionnée y est imbibée ou imprégnée par la dispersion de résine ou le mélange de résine mentionné, et
- la bande décorative imbibée de résine ainsi obtenue est acheminée, après passage dans une étape de raclage pour éliminer le mélange de résine excédentaire à l'état encore frais, c'est-à-dire encore humide, sensiblement directement après,
- à travers une deuxième étape avec un dispositif d'application de résine - de préférence un racle à fil - dans lequel elle est alimentée et revêtue sur son côté décoratif ou côté visuel,
- par un mélange d'une suspension, d'une dispersion ou d'une émulsion aqueuse d'au moins une résine synthétique thermodurcissable ou d'une résine mélamine d'une solution de gel ou d'un mélange de gel obtenu par dissolution, chauffage ou cuisson et gonflement d'un matériau naturel ou synthétique similaire contenant un ou des polysaccharides ou riche en polysaccharides mentionné dans la revendication 1 avec de l'eau, avec ou sans application de pression, ledit mélange se voyant ajouter au moins un additif et/ou un matériau auxiliaire, de sorte que, dans ce mélange, une quantité respectivement souhaitée de particules de matériau abrasif ou de particules d'α-aluminium ou d'α-corindon soit incorporée et répartie de manière homogène,
- après quoi, après avoir raclé un mélange de résine excédentaire et avec ou sans application intermédiaire d'un séchage antérieur ou intermédiaire et/ou après durcissement sous l'action d'une pression à la température de durcissement respective, la liaison de la bande décorative ainsi traitée avec la bande de support ou bande centrale également imprégnée de résine thermodurcissable, seule ou conjointement avec le corps de support ou la plaque de matériau à base de bois.

8. Procédé selon la revendication 7, **caractérisé en ce qui** :
- on utilise une bande décorative à base d'un papier de cellulose avec un grammage ou un poids surfacique de 60 à 120 g/ cm² et une valeur Gurley de 10 à 30, de préférence de 15 à 25.

9. Procédé selon la revendication 7 ou 8, **caractérisé en ce que** :
- dans le cas d'une imprégnation de la bande décorative au cours de la première étape avec un mélange de matériau naturel et de dispersion de résine, le matériau naturel ou synthétique similaire contenant des polysaccharides qui est utilisé dans ce mélange et le matériau naturel ou synthétique similaire contenant des polysaccharides utilisé dans la seconde étape du procédé d'alimentation avec le mélange de dispersion de résine, de matériau naturel et de particules abrasives prévu pour la formation de la couche d'usure sont sensiblement identiques l'un avec l'autre, et/ou
- respectivement, les dispersions de résine base ou les dispersions de résine mélamine du mélange de résine d'imprégnation utilisé à la première étape et du mélange de résine de la couche d'usure utilisée à la deuxième étape sont sensiblement identiques l'un à l'autre.

10. Procédé selon l'une quelconque des revendications 7 à 9, **caractérisé en ce qui :**
- à la première étape, au cours de l'imprégnation de la bande décorative et/ou à la deuxième étape au cours de l'application de la couche d'usure, on introduit dans les masses de résine synthétique prévues à cet effet au moins un matériau naturel mentionné dans la revendication 1 et/ou un matériau abrasif mentionné dans la revendication 2 et spécifié plus en détail dans cette revendication.
